# EUROPEAN PATENT APPLICATION

(11) **EP 4 541 597 A1**
(43) Date of publication of application: **23.04.2025**
(21) Application number: 24206849.2
(22) Date of filing: 16.10.2024
(51) Int. Cl.: B41J 11/46, B41J 3/407, B41J 3/60, B41J 11/00, B41J 29/17, G03G 15/23

(54) **PRINTING DEVICE AND PRINTING METHOD**

(30) Priority: 18.10.2023 JP 2023179589
(71) Applicant: Seiko Epson Corporation, Tokyo 160-8801 (JP)
(72) Inventor: SHIMIZU, Sho, Suwa-shi, Nagano, 392-8502 (JP); KATSUDA, Osamu, Suwa-shi, Nagano, 392-8502 (JP)
(74) Representative: MERH-IP Matias Erny Reichl Hoffmann Patentanwälte PartG mbB

(57) **Abstract**

A printing device 1 includes a transport belt 5 that transports a cloth M in a transport direction A in a state where a first surface M1 of the cloth M faces the adhesive layer 5a, printing section that print an image on a second surface M2 of the cloth M, which is an opposite side to the first surface M1 and which is transported by the transport belt 5, and an infrared image capturing section 30 that uses infrared light to capture an image of a capture target I formed on the first surface M1 of the cloth M that is transported by the transport belt 5, wherein the printing section has a first head 101 that is configured to eject an image forming ink for forming the image and a second head 102 that is configured to eject a capture target forming ink for forming the capture target I.

## Description

The present application is based on, and claims priority from JP Application Serial Number 2023-179589, filed October 18, 2023, the disclosure of which is hereby incorporated by reference herein in its entirety.

### BACKGROUND

### 1. Technical Field

The present disclosure relates to a printing device and a printing method.

### 2. Related Art

In the related art, various printing devices have been used. Some of these printing devices print on cloth. For example, JP-T-2022-502291 discloses a double-sided printing system that is capable of printing on both surfaces of cloth.

In a printing device that prints on both surfaces of cloth, such as the double-sided printing system of JP-T-2022-502291, it is often desirable to align a position of an image printed on the front surface with that of an image printed on the back surface. For this reason, there is a configuration having a detection section that detects a position of the image that was printed on one surface of the cloth. The double-sided printing system in JP-T-2022-502291 has a scanning equipment and enables reading a first printing image on a first surface. However, the scanning equipment of the double-sided printing system in JP-T-2022-502291 is configured to detect a position of the image using visible light. Thus, the detection capability of an image on the back surface is low and it is difficult, in some cases, to print an image at a desired position with respect to the image on the back surface.

### SUMMARY

The printing device according to the present disclosure to overcome the above problem includes a transport belt that has an adhesive layer that supports cloth as a medium and that transports the cloth in a transport direction in a state where a first surface of the cloth faces the adhesive layer; a printing section that prints an image on a second surface of the cloth transported by the transport belt, the second surface being an opposite side surface to the first surface, and an infrared image capturing section that uses infrared light to capture an image of a capture target provided on the first surface of the cloth being transported by the transport belt, wherein the printing section has a first head that is configured to eject an image forming ink for forming the image and a second head that is configured to eject a capture target forming ink for forming the capture target.

A printing method according to the present disclosure to overcome the above problem is a printing method for a printing device that includes a transport belt that has an adhesive layer that supports a cloth as a medium and transports the cloth in a transport direction in a state where a first surface of the cloth faces the adhesive layer, a printing section that prints an image on a second surface of the cloth transported by the transport belt, the second surface being an opposite side surface to the first surface, and the printing section has a first head that is configured to eject an image forming ink for forming the image and a second head that is configured to eject a capture target forming ink for forming a capture target, the printing method including a capture target printing step of printing the capture target by ejecting the capture target forming ink from the second head; an infrared image capturing step of using infrared light to capture the capture target on the first surface of the cloth being transported by the transport belt; a correction step of correcting at least one of the image and a printing position of the image based on captured data that was captured in the infrared image capturing step; and a second surface printing step of printing the image on the second surface by, based on the correction result in the correction step, ejecting the image forming ink from the first head onto the cloth being transported by the transport belt.

### BRIEF DESCRIPTION OF THE DRAWINGS

FIG. 1 is a schematic side view of a printing device according to one embodiment of this disclosure.
FIG. 2 is a schematic diagram showing a capture target formed of grid lines that can be formed by the printing device of FIG. 1, and is a diagram showing a case where a medium is not deformed and a case where the medium is deformed.
FIG. 3 is a schematic diagram showing a capture target formed of dots that can be formed by the printing device of FIG. 1, and is a diagram showing a case where the medium is not deformed and a case where the medium is deformed.
FIG. 4 is a schematic diagram showing a capture target formed of dots that can be formed by the printing device of FIG. 1, which is different from FIG. 3, and is a diagram showing a case where the medium is not deformed and a case where the medium is deformed.
FIG. 5 is a flowchart of an example of a printing method using the printing device of FIG. 1.
FIG. 6 is a flowchart of another example of the printing method using the printing device of FIG. 1, which is different from FIG. 5.

### DESCRIPTION OF EMBODIMENTS

First, a brief overview of the present disclosure is described. A first aspect according to a printing device in this disclosure to solve the above problem includes a transport belt that has an adhesive layer that supports cloth as a medium and that transports the cloth in a transport direction in a state where a first surface of the cloth faces the adhesive layer; a printing section that prints an image on a second surface of the cloth transported by the transport belt, the second surface being an opposite side surface to the first surface, and an infrared image capturing section that uses infrared light to capture an image of a capture target provided on the first surface of the cloth being transported by the transport belt, wherein the printing section has a first head that is configured to eject an image forming ink for forming the image and a second head that is configured to eject a capture target forming ink for forming the capture target.

According to this aspect, the infrared image capturing section is provided that uses infrared light to capture an image of the capture target that was formed on the first surface of the cloth is being transported by the transport belt. Since infrared light is more likely to pass through cloth than is visible light, it is possible to suitably capture an image of the capture target. The printing section has the first head that is capable of ejecting the image forming ink and the second head that is capable of ejecting the capture target forming ink. Therefore, it is possible to form a capture target with high capture accuracy by using the capture target forming ink. Therefore, in a case where double-sided printing is performed on the cloth, it is possible to print an image at a desired position on the front surface of the cloth with respect to an image on the back surface of it.

A second aspect of the printing device according to this disclosure is an aspect according to the first aspect, wherein the capture target is at least one of dots that are arranged in the transport direction and in an intersecting direction that intersects the transport direction, and grid lines that are configured by a plurality of lines extending in the transport direction and in the intersecting direction.

According to this aspect, the capture target is at least one of dots arranged in the transport direction and the intersecting direction, and grid lines composed of a plurality of lines extending in the transport direction and the intersecting direction. By configuring the capture target in this way, it is possible to suitably determine a printing position of the image in the transport direction and the intersecting direction.

A third aspect of the printing device according to this disclosure is an aspect according to the first or second aspect, wherein both the dots and the grid lines are configured to be formed as the capture target by ejecting the capture target forming ink from the second head and the printing device is configured so that forming either the dots or the grid lines as the capture target is selectable.

According to this aspect, it is configured so that formation dots or grid lines as a capture target can be selected. Therefore, it is possible to select a suitable capture target according to the type of cloth to be used, printing conditions, and the like.

A fourth aspect of the printing device according to this disclosure is an aspect according to the second aspect, wherein the printing device is configured to form the dots as the capture target by ejecting the capture target forming ink from the second head and the dots have a different shape or size in at least one direction of the transport direction and the intersecting direction.

According to the aspect, dots as the capture target have a different shape or size in at least one direction of the transport direction and the intersecting direction. When deformation of the cloth increases, there is concern that a dot captured as a captu re target may be falsely recognized as an adjacent dot. However, with this configuration, it is possible to suppress false recognition as adjacent dots.

A fifth aspect of the printing device according to this disclosure is an aspect according to the first aspect, further including a correction section that corrects at least one of the image and a printing position of the image based on captured data that was captured by the infrared image capturing section.

According to this aspect, a correction section is provided that corrects at least one of the image and the printing position of the image based on the captured data that was captured by the infrared image capturing section. With such a configuration, when performing double-sided printing on cloth, based on the correction result by the correction section, the image can be automatically and easily printed at a desired position with respect to an image on the back surface.

A sixth aspect of the printing device according to this disclosure is an aspect according to any one of the first to fifth aspects, wherein the capture target forming ink has a lower infrared light transmittance than that of the image forming ink.

According to this aspect, the capture target forming ink has a lower infrared light transmittance than that of the image forming ink. By this, when performing double-sided printing on cloth, the capture accuracy of the capture target forming ink is increased, and it is possible to particularly suitably print the image at a desired position on a front surface with respect to an image on the back surface.

A seventh aspect of a printing method according to this disclosure including a transport belt that has an adhesive layer that supports cloth as a medium and that transports the cloth in a transport direction in a state where a first surface of the cloth faces the adhesive layer; a printing section that prints an image on a second surface of the cloth, which is an opposite side to the first surface and which is transported by the transport belt, and the printing section has a first head that is configured to eject an image forming ink for forming the image and a second head that is configured to eject a capture target forming ink for forming a capture target, the printing method of the printing device includes a capture target printing step of printing the capture target by ejecting the capture target forming ink from the second head; an infrared image capturing step of using infrared light to capture the capture target on the first surface of the cloth being transported by the transport belt; a correction step of correcting at least one of the image and a printing position of the image based on captured data that was captured in the infrared image capturing step; and a second surface printing step of printing the image on the second surface by, based on the correction result in the correction step, ejecting the image forming ink from the first head onto the cloth being transported by the transport belt.

According to this aspect, at least one of the image and a printing position of the image is corrected and printed, based on the captured data that was captured by the infrared image capturing section. By executing such a printing method, when performing double-sided printing on cloth, it is possible to automatically and easily print an image at a desired position based on the correction result in the correction step.

An eighth aspect of the printing method according to this disclosure is an aspect according to the seventh aspect, further including a separate image printing step of printing a separate image that is different from the image by ejecting the image forming ink from the first head, wherein the separate image printing step is executed prior to the infrared image capturing step.

According to this aspect, prior to the infrared image capturing step, the separate image printing step that prints a separate image by ejecting the image forming ink from the first head is executed. By executing such a printing method, it is possible to perform suitable double-side printing on cloth, which consists of a separate image printed in the separate image printing step and an image printed in the second surface printing step.

A ninth aspect of the printing method according to this disclosure is an aspect according to the eighth aspect, wherein the separate image printing step is executed together with the capture target printing step.

According to this aspect, the separate image printing step is executed together with the capture target printing step. By executing such a printing method, the printing time can be reduced.

A tenth aspect of the printing method according to this disclosure is an aspect according to the eighth aspect, wherein the separate image printing step is executed separately from the capture target printing step.

According to this aspect, the separate image printing step is executed separately from the capture target printing step. By executing such a printing method, a capture target can be formed in an accurate position with respect to a separate image. As a result, positioning accuracy of double-sided printing can be increased.

An eleventh aspect of the printing method according to this disclosure is an aspect according to the eighth aspect, further including after the separate image printing step was executed and before the second surface printing step is executed, a overturn step of turning over and setting the cloth, wherein the image and the separate image are printed on different surfaces of the cloth.

According to this aspect, the method further includes the overturn step of overturning and setting the cloth after the separate image printing step was executed and before the second surface printing step is executed, and the image by the second surface printing step and the separate image by the separate image printing step are printed on different surfaces of the cloth. By executing such a printing method, desirable double-sided printing can be performed.

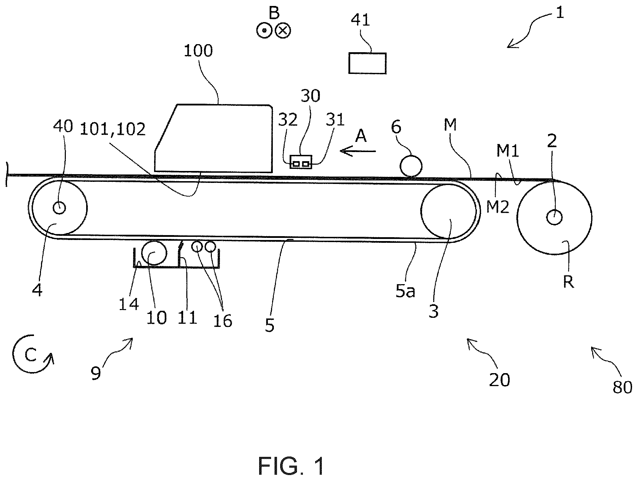

Hereinafter, embodiments in this disclosure will be described with reference to the attached figures. First, an outline of a printing device 1 according to an embodiment of the printing device 1 of this disclosure will be described with reference to FIG. 1.

As shown in FIG. 1, the printing device 1 in this embodiment is equipped with a holding section 80 that is capable of rotatably holding a roll body R in which the medium M is wound in a roll shape, and a transport section 20 that has a drive section 40, which is a motor, and that transports the medium M being fed from the holding section 80 in a transport direction A by a driving force of the drive section 40. The drive section 40 is driven under control of the control section 41. The control section 41 has a CPU and a storage unit, and performs drive control of each component of the printing device 1 in this embodiment.

The holding section 80 has a holding shaft 2 that holds the roll body R. The holding shaft is inserted into a paper pipe that serves as a rotation shaft of the roll body R. The holding section 80 can rotate the holding shaft 2 in a rotation direction C to feed the medium M from the roll body R to the transport section 20. The printing device 1 according to this embodiment has a pressure roller 6 that presses the medium M against the transport belt 5 in a region facing the transport belt 5, which constitutes the transport section 20. However, it may also be configured without the pressure roller 6 and the like.

The transport section 20 has a driven roller 3, which is located on an upstream side of the transport direction A, a drive roller 4, which is located on a downstream side of the transport direction A, and a transport belt 5, which is an endless belt and is wound over the driven roller 3 and the drive roller 4. The transport belt 5 is an adhesive belt having an adhesive layer 5a. The outer surface of the transport belt 5, which is a support surface of the medium M, is coated with adhesive. From another perspective, the transport belt 5 is an adhesive belt that has an adhesive layer 5a that supports the medium M and transports the cloth in transport direction A in a state where a first surface M1 of the cloth is facing the adhesive layer 5a.

As shown in FIG. 1, in a state where the first surface M1 of the medium M is attached to the adhesive layer 5a, the medium M is transported while the medium M is supported by the transport belt 5. In the printing device 1 according to this embodiment, a medium support region of the transport belt 5, which supports the medium M, is an upper side region of the transport belt 5, which is wound around the driven roller 3 and the drive roller 4. The drive roller 4 is a roller that rotates in a rotation direction C by driving force of the drive section 40, which is a motor. The driven roller 3 is a roller that is driven by the rotation of the transport belt 5, which is caused by the rotation of the drive roller 4.

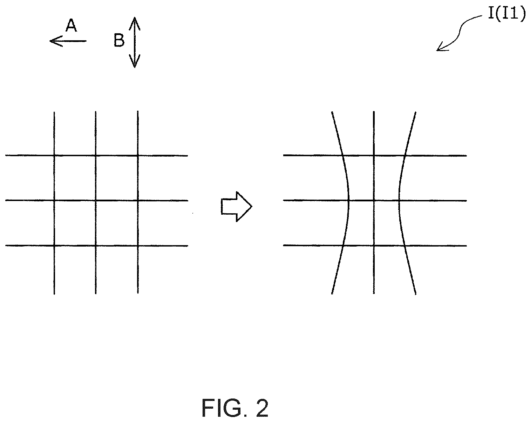

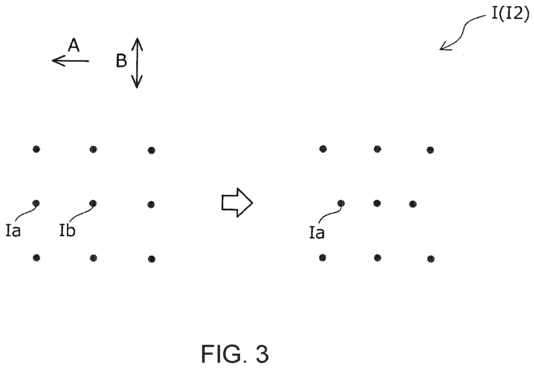

The printing device 1 according to this embodiment has a carriage 100 that can reciprocate in the width direction B of the transport belt 5, and a first head 101 and a second head 102 that are attached to the carriage 100. The first head 101 is a printing section that is, based on print data, capable of printing an image by ejecting an image forming ink to form the image on a second surface M2 of the medium M that is being transported in transport direction A. The second head 102 is a printing section that is capable of ejecting a capture target forming ink to form a capture target I shown in FIGS. 2 and 3.

The printing device 1 according to this embodiment is capable of forming an image by ejecting the image forming ink from the first head 101 onto the medium M being transported, while reciprocating the carriage 100 in the width direction B, which intersects the transport direction A, and is capable of forming a capture target I by ejecting the capture target forming ink from the second head 102 onto the medium M being transported. By having the carriage 100 with such a configuration, the printing device 1 according to this embodiment can form at least one of a desired image and a capture target I on the medium M by alternatively repeating a process of transporting the medium M in the transport direction A by a predetermined transport amount and a process of ejecting at least one of the image forming ink and the capture target forming ink while moving the carriage 100 in the width direction B in a state where the medium M is being stopped.

As described above, the printing device 1 according to this embodiment has a so-called serial head type ejection head, in which the first head 101 and the second head 102 mounted on the carriage 100 that can reciprocate in the width direction B. However, it is not limited to such an ejection head. For example, the printing section may be a line head type printing section in which the first head 101 and the second head 102 extend in the width direction B and are fixed, and a plurality of nozzles that eject ink are arranged along the width direction B. In the case of a configuration that has the line head type printing section, the medium M can be transported by so-called continuous transport, in which the medium M is transported continuously, rather than by so-called intermittent transport, in which the medium M is transported by a predetermined transport amount and the medium M is stopped repeatedly, as in the printing device 1 according to this embodiment.

When a medium M on which at least one of the image and the capture target I is formed by ejecting ink from at least one of the first head 101 and the second head 102 is discharged from the printing device 1 according to this embodiment, the medium M is sent to a drying device which volatilizes a component of the ink ejected onto the medium M, a winding device which winds the medium M on which the image is formed, or the like, which is provided in a subsequent stage of the printing device 1 according to this embodiment.

As the medium M, textile print materials such as cloth can be desirably used. Textile print materials refer to fabrics, clothes, other clothing products, and the like that are objects to be printed on. Fabrics include woven, knitted, and non-woven fabrics made of natural fibers such as cotton, silk, and wool, synthetic fibers such as nylon, or composite fibers mixed with these fibers. Clothes and other clothing products include sewn T-shirts, handkerchiefs, scarves, towels, carrier bags, bags made of cloth, curtains, sheets, bedspreads, and other furniture, as well as fabrics before and after cutting, which exist as parts before being sewn together. However, in addition to the above-mentioned textile print materials, special papers for inkjet printing such as plain papers, high-quality papers, and glossy papers can also be used.

When textile print material is used as a medium M, ink ejected onto the textile print material tends to seep through the back side of the medium M, which is a phenomenon of ink bleeding to the back side, and the transport belt 5 may become stained with ink. Thus, the printing device 1 according to this embodiment is provided with a washing section 9 that cleans ink that has bled through a medium and adhered on the transport belt 5. The washing section 9 according to this embodiment has a storage tank 14 in which the washing liquid is stored, a washing roller 10 that is immersed in the washing liquid and comes into contact with the transport belt 5, a blade 11 that extends in the width direction B and wipes off the washing liquid clinging to the transport belt 5, and an absorption roller 16 that absorbs the washing liquid that could not be wiped off by the blade 11.

As described above, the printing device 1 according to this embodiment has the transport belt 5 that transports a medium M such as cloth in the transport direction A in a state where a first surface M1 of the medium M faces the adhesive layer 5a, the first head 101 that prints an image and the second head 102 that prints a capture target I on a second surface M2 of the medium M, which is the opposite side surface to the first surface M1 of the medium M being transported by the transport belt 5. As shown in FIG. 1, the printing device 1 according to this embodiment is further provided with an infrared image capturing section 30 that uses infrared light with respect to the medium M being transported by the transport belt 5 to capture the capture target I provided on the first surface M1 of the medium M.

In a configuration where visible light is used in a detection section that detects the capture target I, when cloth is used as the medium M, a detection accuracy of the capture target I decreases. In particular, when a thick felt or the like is used as the medium M, the detection accuracy of the capture target I particularly decreases. On the other hand, infrared light is more likely to pass through cloth or the like than is visible light. Therefore, by providing the infrared image capturing section 30 that uses infrared light to capture images of the capture target I formed on the first surface M1, an image of the capture target I can be suitably captured. By capturing an image of the capture target I, it is possible to form an image at a suitable position on the second surface M2 with respect to the first surface M1 based on the capture result. Therefore, the printing device 1 according to this embodiment, for example, in the case of performing double-sided printing on cloth, can print an image at a desired front surface position with respect to the image on the back surface.

The printing device 1 according to this embodiment has, as the printing section, the second head 102 that is capable of ejecting the capture target forming ink that forms the capture target I, in addition to the first head 101 that is capable of ejecting the image forming ink that forms an image. Therefore, the printing device 1 according to this embodiment can suitably form the capture target I with high capture accuracy by using the capture target forming ink. The printing device 1 according to this embodiment can form a capture target I and an image on one surface of the medium M, turn over the medium M and set the medium M in the printing device 1 again, capture an image of the capture target I, then, based on the capture result, form an image by ejecting the image forming ink from the first head 101 on the other side surface of the medium M. Therefore, when double-sided printing is performed on cloth as the medium M, the printing device 1 according to this embodiment can print an image at a desired position on the front surface of the medium M with respect to the image on the back surface.

As described above, the printing device 1 according to this embodiment has the control section 41. The control section 41 can work as a correction section that corrects at least one of an image to be printed by the first head 101 and a printing position of the image, based on captured data of the capture target I that was captured by the infrared image capturing section 30. With such a configuration, for example, when performing a double-sided printing on a medium M, based on a correction result by the control section 41 as the correction section, the printing device 1 according to this embodiment can automatically and easily print a new image (second image) at a desired position on the second surface M2 of the medium M with respect to an image (first image) of the back surface (first surface M1) of the medium M.

Correction of the printing position of the image corresponds, for example, when the same image is formed on the first surface M1 and the second surface M2 by aligning positions of both, to correcting the position of the image to be printed on the second surface M2 in response to the printing image on the first surface M1. Correction of the image corresponds to, for example, when the same image is formed on the first surface M1 and the second surface M2 by aligning the positions of both, to correcting image data so as to correspond to the stretched or shrunken state of the medium M when it was attached to the adhesive layer 5a in a stretched or shrunken state. By this, when the medium M is removed from the adhesive layer 5a and is released from being stretched or shrunk, the images on the first surface M1 and the second surface M2 are corrected so that the images on the first surface M1 and the second surface M2 are the same and positionally aligned.

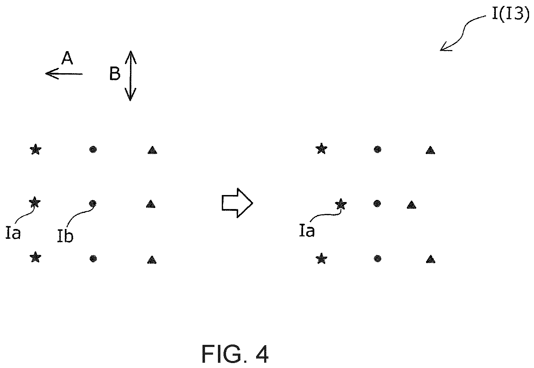

The printing device 1 in this embodiment can form, as a capture target I, as shown in FIG. 2, grid lines l1 that are composed of a plurality of lines extending in the transport direction A and in the width direction B, which intersects the transport direction A. The printing device 1 according to this embodiment can form, as a capture target I, as shown in FIG. 3, a plurality of circular dots l2 that are arranged in the transport direction A and the width direction B. The printing device 1 according to this embodiment can form, as a capture target I, as shown in FIG. 4, a plurality of star-shaped, circular, and triangular dots l3 that are arranged in the transport direction A and the width direction B.

As described above, it is desirable that the capture target I is at least one of the dots l2 or l3, a plurality of which are arranged in the transport direction A and the width direction B, and grid lines l1, which are composed of a plurality of lines extending in the transport direction A and the width direction B. By configuring the capture target I in such a way, it is possible to determine the position where the image is suitably printed in the transport direction A and the width direction B.

As described above, the printing device 1 according to this embodiment can form both the dots l2 or l3 and the grid lines l1 as the capture target I by ejecting the capture target forming ink from the second head 102, but it is possible to select, by a PC (not shown) or the like, which of the dots l2 or l3 and the grid line l1 is formed as the capture target I . Therefore, the printing device 1 according to this embodiment can select a suitable capture target I according to a type of medium M, such as cloth to be used, printing conditions, and the like.

As shown in FIGS. 2 to 4, when a medium M is attached to the transport belt 5, the medium M may not be deformed as shown in state diagrams on the left side of FIGS. 2 to 4, or the medium M may be deformed as shown in state diagrams on the right side of FIGS. 2 to 4. In a state where the medium M is not deformed, the grid lines l1 are straight lines as shown in the state diagram on the left side of FIG. 2, and the dots of the dots l2 or l3 are arranged in a straight line as shown in the state diagram on the left side of FIGS. 3 and 4. On the other hand, in a state where the medium M is deformed, as shown in the state diagram on the right side of FIG. 2, some of the grid lines l1 are curved, and as shown in the state diagram on the right side of FIGS. 3 and 4, some of dots of the dots l2 or l3 are aligned in a distorted manner.

As described above, since the printing device 1 according to this embodiment has the control section 41 as the correction section, it is possible to determine a degree of deformation of a medium M according to bending of the grid lines l1 or distortion in alignment of the dots l2 or l3 and to correct at least one of an image and a printing position of the image to be printed by the first head 101. Thus, for example, in a case when an image (first image) is formed on a surface of a medium M on which a capture target I has been formed (first surface M1) and, together with this first image, images are to be formed on both surfaces of the medium M, it is possible to form a second image corresponding to the first image that was formed on the first surface M1, on the second surface M2 of the medium M, which is an opposite surface (second surface M2) to the surface on which the capture target I was formed. In other words, it is possible to perform double-sided printing.

When using the grid lines l1 as the capture target I, the capture target I becomes more noticeable than when using the dots l2 or l3 as the capture target I, and amount of the capture target forming ink to be used is also more likely to be higher. However, even if deformation of the medium M is large, it is possible to accurately recognize the amount of deformation of the medium M. On the other hand, when using the dots l2 as the capture target I, if deformation of the medium M is large and distortion of the alignment of the dots l2 is large, for example, dot la of the dots l2 represented in the state diagram on the right side of FIG. 3 may be falsely recognized as dot Ib represented in the state diagram on the left side of FIG. 3.

So, as described above, the printing device 1 according to this embodiment can, as represented in FIG. 4, form a plurality of star-shaped, circular, and triangular dots l3 aligned in the transport direction A and the width direction B as the capture target I. By using dots that differ in shape or size in at least one of the transport direction A and the width direction B, such as the dots l3, even if the deformation of the medium M becomes larger, it is possible to suppress false recognition of the dots as the capture target I as an adjacent dot when capturing the image of dots.

From the above, it is desirable to decide, depending on the Young's modulus of the medium M to be used, whether to use the grid lines l1 or the dots l2 or l3 as the capture target I. If the medium M is likely to be significantly deformed based on Young's modulus, the grid lines l1 or the dots l3 are desirably used as the capture target I. If the medium M is not likely to be significantly deformed based on Young's modulus, the dots l2 are desirably used as the capture target I, and so on.

It is desirable that the capture target forming ink has lower infrared light transmittance than that of the image forming ink. This is because an image capture accuracy of the capture target forming ink is increased, and when performing double-sided printing on the medium M, an image can be particularly desirably printed at a desired position on the front surface of the medium M with respect to an image or the like on the back surface.

As the image forming ink, for example, color inks for general inkjet printers can be used. As the capture target forming ink, for example, inks containing near-infrared absorbing material manufactured by Ohkuchi Electronics Co., Ltd., inks containing near-infrared absorbing material manufactured by Sumitomo Metal Mining Co., Ltd., inks containing infrared cutting agent manufactured by FUJIFILM Corporation, or the like can be used.

As shown in FIG. 1, in the printing device 1 according to this embodiment, the infrared image capturing section 30 has a light emitting section 31 that emits infrared light and a light receiving section 32 that receives infrared light. Both the light emitting section 31 and the light receiving section 32 are located on the side facing the second surface M2. In the printing device 1 according to this embodiment, the transport belt 5 is made of a material that reflects infrared light. However, it is not limited to such a configuration. For example, both the light emitting section 31 and the light receiving section 32 may be located on the side facing the first surface M1, or one of the light emitting section 31 and the light receiving section 32 may be located on the first surface M1 side and the other may be located on the second surface M2 side. However, in these configurations, the transport belt 5 must be made of a material that transmits infrared light.

In order to suitably capture images of the capture target I, the light emitting section 31 is desirably configured with light emitting elements aligned in a line shape along the width direction B or transport direction A, or with light emitting elements arranged in a plane along the width direction B and transport direction A. The light receiving section 32 is also desirably configured with the light receiving elements aligned in a line shape along the width direction B or the transport direction A, or with the light receiving elements arranged in a plane along the width direction B and the transport direction A.

As described above, the printing device 1 according to this embodiment can desirably perform double-sided printing. A medium M used in such cases is basically a medium that does not have a printing image or the like on both surfaces. The first image and the capture target I are formed on one surface of this medium M. The medium M is then turned over and re-set in the printing device 1, and the second image is formed on the other surface of the medium M, aligning to a position of the first image. From another perspective, a medium M that can be used in this embodiment before the formation of the second image is a medium M in which a printing image has been formed on the first surface M1 of the medium M and no image is printed on the second surface M2. However, it is also possible to use a medium in which an image or the like is formed in advance on a part of the medium M.

When forming a double-sided printed object, it is possible to form the same image on the first surface M1 and the second surface M2 with their positions aligned. However, in addition to such a double-sided printed object, different images may be formed on the first surface M1 and the second surface M2 by aligning the positions of the both, or the same or different images may be formed on the first surface M1 and the second surface M2 by differentiating the positions of both by a predetermined distance.

As shown in FIG. 1, the printing device 1 in this embodiment has a pressing section 6 that presses the medium M against the adhesive layer 5a. By this, the medium M can be firmly supported by the adhesive layer 5a. On the other hand, in the configuration with the pressing section 6 that presses the medium M to the adhesive layer 5a, the medium M is easily deformed or the like when the medium M is pressed onto the adhesive layer 5a, and this makes it difficult to align the positions of the images on both surfaces when performing double-sided printing on soft cloths or the like. However, by providing the infrared image capturing section 30 that captures an image of the capture target I formed on the first surface M1, the images on both surfaces can be aligned suitably.

In the printing device 1 according to this embodiment, the infrared image capturing section 30 is detachable. By configuring the infrared image capturing section 30 to be detachable, it can be easily replaced if the infrared image capturing section 30 is broken, and it can be easily cleaned when the infrared image capturing section 30 becomes dirty.

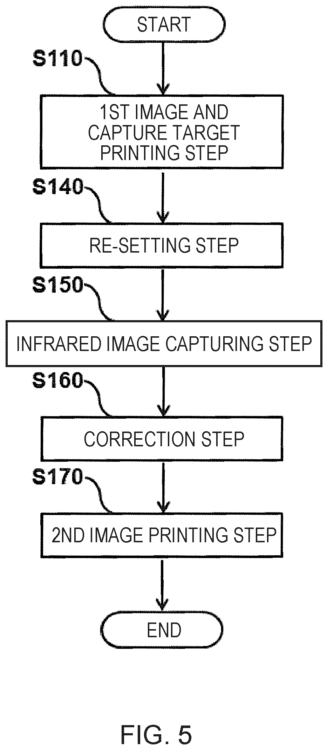

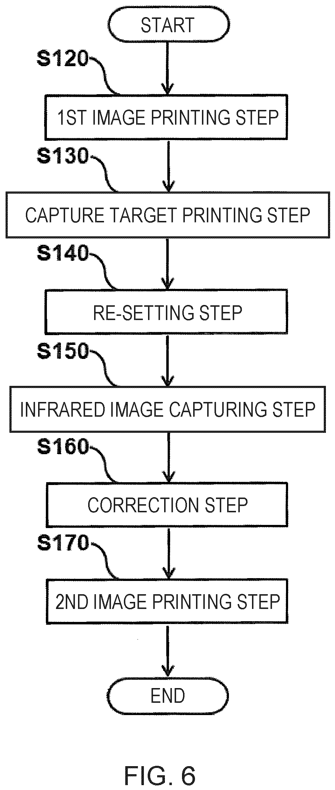

Referring to the flowcharts in FIG. 5 and FIG. 6, printing methods using the printing device 1 according to this embodiment will be explained from the perspective of the printing method using the printing device 1. In the printing methods represented by the flowcharts in FIGS. 5 and 6, the following steps are executed using the printing device 1 according to this embodiment. In a printing method represented by the flowchart in FIG. 5, first, in a first image and capture target printing step in step S110, a first image is printed by ejecting the image forming ink from the first head 101 and also a capture target I is printed by ejecting the capture target forming ink from the second head 102. On the other hand, in a printing method represented by the flowchart in FIG. 6, first, a first image is printed by ejecting the image forming ink from the first head 101 in a first image printing step in step S120. Once the medium M is rewound in the direction opposite to the transport direction A, then in step S130, a capture target I is printed by ejecting the capture target forming ink from the second head 102. Step S110 of the flowchart in FIG. 5 and step S130 of the flowchart in FIG. 6 correspond to the capture target printing step in which the capture target forming ink is ejected from the second head 102 to print the capture target I. The capture target I may be printed so as to overlap the first image, or may be printed in a different position from the first image. There is no particular limit to a size of the capture target I, it can be made particularly unobtrusive by reducing its length to 100 µm or less.

The subsequent steps are common to the printing method shown in the flowchart in FIG. 5 and the printing method shown in the flowchart in FIG. 6. After completion of step S110 or step S130, in a re-setting step S140, the medium M is re-set in the printing device 1 so that the surface of the medium M on which the first image and the capture target I has been formed becomes the opposite to the side that faces the first head 101 and the second head 102. Next, in an infrared image capturing step in step S150, an image of the capture target located on the first surface M1 is captured by using infrared light with respect to the medium M being transported by the transport belt 5. Next, in a correction step in step S160, at least one of a second image to be formed on the second surface M2 and a printing position of the second image is corrected based on the captured data obtained in the infrared image capturing step in step S150. Next, in a second image printing step in step S170, based on the correction results of the correction step in step S160, a printing method is executed including a second image printing step, which is a second surface printing step that prints a second image on the second surface M2 by ejecting the image forming ink from the first head 101 onto the medium M being transported by the transport belt 5. By executing such a printing method, when performing double-sided printing on cloth, it is possible to automatically and easily print an image at a desired position based on the correction result in the correction step.

The printing method represented by the flowchart in FIG. 5 executes, in step S110, prior to an infrared image capturing step in step S150, the first image and capture target printing step that prints the first image, which is a different image from the second image, by ejecting the image forming ink from the first head 101 as a separate image printing step. On the other hand, the printing method represented by the flowchart in FIG. 6 executes, in step S120, prior to the infrared image capturing step in step S150, the first image printing step that prints the first image, which is a different image from the second image, by ejecting the image forming ink from the first head 101 as the separate image printing step. By executing such a printing method, it is possible to perform suitable double-sided printing on a medium M, such as cloth, comprising the separate image formed in the separate image printing step and the image to be printed in the second surface printing step.

As described above, in the printing method represented by the flowchart in FIG. 5, in step S110, the separate image printing step is executed together with the capture target printing step. By executing such a printing method, the printing time can be reduced.

On the other hand, in the printing method represented by the flowchart in FIG. 6, the separate image printing step (step S120) is executed separately from the capture target printing step (step S130). By executing such a printing method, it is possible to form the capture target I at an accurate position with respect to a separate image (first image), and alignment accuracy of positions of the double-sided printing can be increased.

The printing methods shown in the flowcharts in FIGS. 5 and 6 include a re-setting step (step S140) corresponding to an overturn step that overturns and sets the medium M after the execution of the separate image printing step (step S110 and step S120) and before the execution of the second surface printing step (step S170). By this, the second image and the first image are printed on different surfaces of the medium M. By executing such a printing method, desirable double-sided printing can be performed.

Note that the present disclosure is not limited to the above described embodiments, and various modifications can be made within the scope of the disclosure described in the claims, and it goes without saying that they are also included in the scope of the present disclosure. As described above, the printing device 1 according to this embodiment prints, on one surface of the medium M, the first image using the image forming ink that easily absorbs visible light, such as a general color ink, and the capture target I by using the capture target forming ink that easily absorbs infrared light but hardly absorbs visible light. Then, on the other surface of the medium M, a second image, which is, for example, the same image as the first image, is printed in alignment with the position of the first image using an image forming ink that easily absorbs visible light, such as a general color ink. Not limited to such a configuration, the second image may be printed displaced from the position of the first image or a second image that is a different image from the first image may be printed. The capture target I may be printed so as to overlap the first image, or the capture target I may be printed at a position different from the first image.

By using the printing device 1 according to this embodiment, it may be such that the capture target I is printed on one surface of the medium M and the medium M is turned over and set. After this, the first image is printed on the other surface of the medium M, and afterward the second image is printed on the surface of the medium M on which the first image was formed. For example, by printing the second image once or several times overlapping the first image based on the position of the capture target I, a three-dimensional printed object can be obtained. In addition, for example, the control section 41 determines the position of the first image based on the position of the image capture target I and a special printed object can be obtained by using special inks such as metallic ink or ink that reacts to black light at the desired position with respect to the position of the first image.

## Claims

1. A printing device comprising:
a transport belt that has an adhesive layer that supports cloth as a medium and that transports the cloth in a transport direction in a state where a first surface of the cloth faces the adhesive layer;
a printing section that prints an image on a second surface of the cloth transported by the transport belt, the second surface being an opposite side surface to the first surface, and
an infrared image capturing section that uses infrared light to capture an image of a capture target provided on the first surface of the cloth being transported by the transport belt, wherein
the printing section has a first head that is configured to eject an image forming ink for forming the image and a second head that is configured to eject a capture target forming ink for forming the capture target.

2. The printing device according to claim 1, wherein
the capture target is at least one of dots that are arranged in the transport direction and in an intersecting direction that intersects the transport direction, and grid lines that are configured by a plurality of lines extending in the transport direction and in the intersecting direction.

3. The printing device according to claim 2, wherein
both the dots and the grid lines are configured to be formed as the capture target by ejecting the capture target forming ink from the second head and
the printing device is configured so that forming either the dots or the grid lines as the capture target is selectable.

4. The printing device according to claim 2, wherein
the printing device is configured to form the dots as the capture target by ejecting the capture target forming ink from the second head and
the dots have a different shape or size in at least one direction of the transport direction and the intersecting direction.

5. The printing device according to claim 1, further comprising:
a correction section that corrects at least one of the image and a printing position of the image based on captured data that was captured by the infrared image capturing section.

6. The printing device according to claim 1 to 5, wherein
the capture target forming ink has a lower infrared light transmittance than that of the image forming ink.

7. A printing method of a printing device, the printing device including
a transport belt that has an adhesive layer that supports cloth as a medium and that transports the cloth in a transport direction in a state where a first surface of the cloth faces the adhesive layer,
a printing section that prints an image on a second surface of the cloth transported by the transport belt, the second surface being an opposite side surface to the first surface, and a printing section having a first head configured to eject an image forming ink for forming the image and a second head configured to eject a capture target forming ink for forming a capture target,
the printing method comprising:
a capture target printing step of printing the capture target by ejecting the capture target forming ink from the second head;
an infrared image capturing step of using infrared light to capture the capture target on the first surface of the cloth being transported by the transport belt;
a correction step of correcting at least one of the image and a printing position of the image based on captured data that was captured in the infrared image capturing step; and
a second surface printing step of printing the image on the second surface by, based on the correction result in the correction step, ejecting the image forming ink from the first head onto the cloth being transported by the transport belt.

8. The printing method according to claim 7, further comprising:
a separate image printing step of printing a separate image that is different from the image by ejecting the image forming ink from the first head, wherein
the separate image printing step is executed prior to the infrared image capturing step.

9. The printing method according to claim 8, wherein
the separate image printing step is executed together with the capture target printing step.

10. The printing method according to claim 8, wherein
the separate image printing step is executed separately from the capture target printing step.

11. The printing method according to claim 8, further comprising:
after the separate image printing step was executed and before the second surface printing step is executed, an overturn step of turning over and setting the cloth, wherein the image and the separate image are printed on different surfaces of the cloth.
